# EUROPÄISCHE PATENTSCHRIFT

(11) **EP 1 648 754 B1**
(45) Veröffentlichungstag und Bekanntmachung des Hinweises auf die Patenterteilung: **08.11.2006**
(21) Anmeldenummer: 04762405.1
(22) Anmeldetag: 16.07.2004
(51) Int. Cl.: B62B 3/14

(54) **EINKAUFSWAGEN**
SUPERMARKET TROLLEY
CHARIOT

(30) Priorität: 01.08.2003 DE 20311916 U
(43) Veröffentlichungstag der Anmeldung: 26.04.2006
(73) Patentinhaber: WANZL METALLWARENFABRIK GMBH, D-89336 Leipheim (DE)
(72) Erfinder: ACIKGÖZ, Ayhan, 89312 Günzburg (DE); BLAHA, Martin, 89335 Ichenhausen/Hochwang (DE)
(86) Internationale Anmeldenummer: PCT/DE2004/001551
(87) Internationale Veröffentlichungsnummer: WO 2005/012059

(56) Entgegenhaltungen:
- DE-A1- 4 033 548
- DE-U1- 29 621 359
- US-A- 4 176 849

## Beschreibung

Die Erfindung betrifft einen Einkaufswagen, in den ein gleicher Einkaufswagen platzsparend einschiebbar ist, mit einem Fahrgestell, das einen aus Drahtgitter gefertigten Korb trägt, mit einer Schiebeeinrichtung und mit einem von der Seite betrachtet parallelogrammartig ausgebildeten Kindersitz, der nahe der Schiebeeinrichtung angeordnet ist, wobei der Kindersitz an einer quer zur Schieberichtung des Einkaufswagens angeordneten horizontalen Achse schwenkbar gelagert ist und sich aus seiner Gebrauchslage, in der er sich am Korbboden abstützt zum Zwecke des Einschiebens eines weiteren gleichen Einkaufswagens nach oben in eine Nichtgebrauchslage verschwenken lässt.

Das deutsche Gebrauchsmuster 296 21 359.4 beschreibt einen Einkaufswagen, der mit einem parallelogrammartig ausgebildeten Kindersitz ausgestattet ist. Die Körbe dieser Einkaufswagen sind aus kreuzweise angeordneten Drähten gebildet. Die Oberfläche der Körbe ist entweder verzinkt oder kunststoffbeschichtet. Werden zwei gleiche Einkaufswagen platzsparend ineinandergeschoben, drückt der Korb des einzuschiebenden Einkaufswagens den Kindersitz des vorausbefindlichen Einkaufswagens nach oben in eine Nichtgebrauchslage. Bei diesem Vorgang faltet sich besagter Kindersitz parallelogrammartig zu einem flachen Paket und wird, bevor er angehoben wird, ein Stück weit auf dem Korbboden verschoben. Bedingt durch die gitterartige Struktur des Korbbodens entstehen beim eben beschriebenen Vorgang erhebliche Reibungskräfte, die beim Einschiebevorgang eines Einkaufswagens überwunden werden müssen und so das Einschieben eines Einkaufswagens in einen weiteren Einkaufswagen erschweren. Die genannten Reibungskräfte verursachen an der Oberfläche des Korbbodens Beschädigungen derart, dass die Zinkschicht oder die Kunststoffschicht an den Gitterstäben abgerieben wird, so dass sich an diesen Stellen Rost ansetzen kann.

Es ist Aufgabe der Erfindung, einen Einkaufswagen der hier vorliegenden Art so weiterzuentwickeln, dass sich die eben beschriebenen Nachteile vermeiden lassen.

Die Lösung der Aufgabe besteht darin, dass am Korbboden wenigstens eine aus gleitfähigem Material bestehende Platte angeordnet ist, auf welcher der Kindersitz schiebebeweglich abgestützt ist.

Die wenigstens eine, bevorzugt aus Kunststoff bestehende Platte vermeidet in vorteilhafter Weise eine Beschädigung des Korbbodens durch den Kindersitz und die Gleiteigenschaften der Platte vermindern die Reibungskräfte beim Bewegen des Kindersitzes, so dass das Einschieben des Einkaufswagens in einen weiteren gleichen Einkaufswagen in zweckmäßiger Weise erleichtert wird.

Die Erfindung wird anhand von Ausführungsbeispielen näher erläutert. Es zeigt
Fig. 1 einen Einkaufswagen in Seitenansicht;
Fig. 2 den Korb des Einkaufswagens in einer Draufsicht sowie
Fig. 3 zwei Einkaufswagen während des Einschiebevorganges.

Der oder die nachfolgend beschriebenen Einkaufswagen entsprechen in ihrer Bauweise bekannten, auf dem Markt befindlichen Einkaufswagen. Auf die Beschreibung von Details, die für die hier vorliegende Erfindung von untergeordneter Bedeutung sind, wird deshalb verzichtet. Diese Details können den bekannten Einkaufswagen entnommen werden.

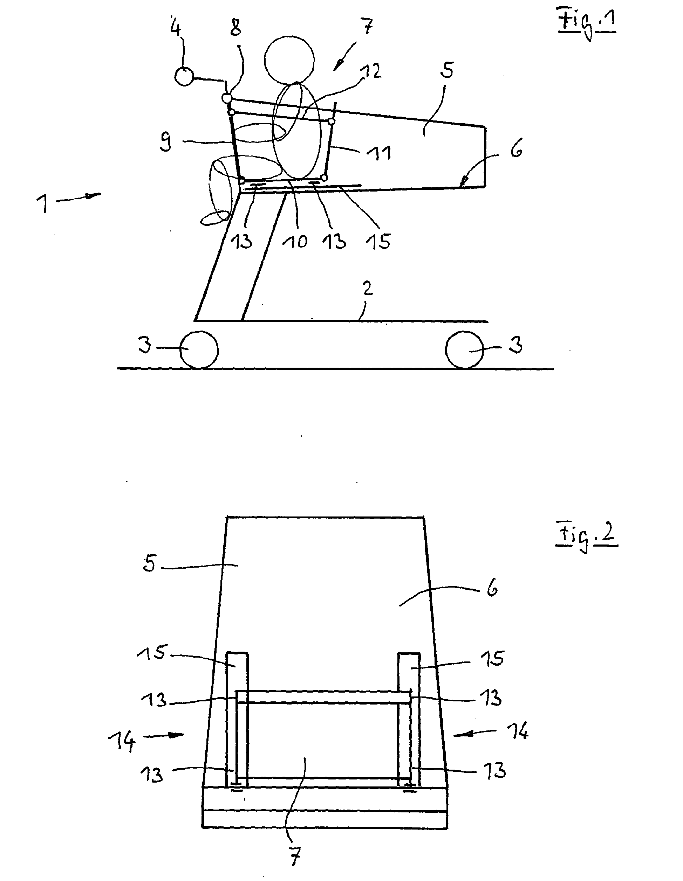

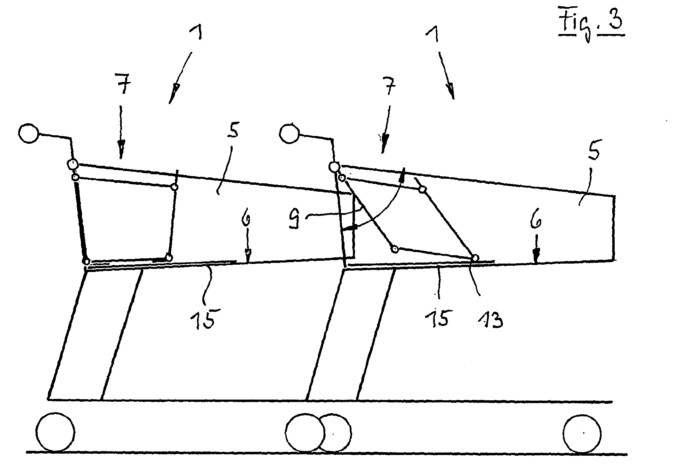

Der in Fig. 1 dargestellte Einkaufswagen 1 weist ein mit Fahrrollen 3 ausgestattetes Fahrgestell 2 auf. Das Fahrgestell 2 trägt einen mit einer Schiebeeinrichtung 4 ausgestatteten Korb 5. Im Korb 5 befindet sich ein von der Seite betrachtet parallelogrammartig gestalteter Kindersitz 7 zur Aufnahme eines Kleinkindes. Der Kindersitz 7 weist eine mit Beinöffnungen ausgestattete Rückwand 9 auf, die auf einer quer zur Schieberichtung des Einkaufswagens 1 sich erstreckenden Achse 8 nach oben verschwenkbar gelagert ist. Am unteren Rand der Rückwand 9 ist eine Sitzplatte 10 angelenkt. Mit der Sitzplatte 10 bewegbar verbunden ist eine Rückenlehne 11 vorgesehen. Mit Hilfe zweier Streben 12 ist die Rückwand 9 mit der Rückenlehne 11 ebenfalls gelenkig verbunden. Die Bauhöhe des Korbes 5 ist niedrig gewählt, weil der Kindersitz 7 mit unteren Abschnitten 13 an wenigstens einer Platte 15 aufliegt, die auf den Korbboden 6 ortsfest aufgesetzt ist. Der Einkaufswagen 1 ist in bekannter Weise so gestaltet, dass in ihm ein gleicher Einkaufswagen 1 platzsparend einschiebbar ist, siehe Fig. 3.

Fig. 2 zeigt den Korb 5 des Einkaufswagens 1 von oben. Die unteren Abschnitte 13 des Kindersitzes 7, mit welchem sich der Kindersitz 7 am Korbboden 6 abstützt, befinden sich in der Regel an den beiden Längsseiten 14 des Kindersitzes 7. Im Beispiel sind deshalb zwei Platten 15 vorgesehen, auf welchen der Kindersitz 7 aufliegt. Anstelle von zwei Platten 15 kann auch nur eine Platte 15 vorgesehen sein, die sich dann nahezu über die gesamte Breite des Korbes 5 erstreckt.

Fig. 3 zeigt zwei Einkaufswagen 1 während des gemeinsamen Einschiebevorganges. Der Korb 5 des links einzuschiebenden Einkaufswagens 1 hat damit begonnen, durch Anschieben die Rückwand 9 und damit den Kindersitz 7 des vorausbefindlichen, rechts dargestellten Einkaufswagens 1 in die Nichtgebrauchslage zu bewegen. Bei diesem Vorgang faltet sich der Kindersitz 7 des vorausbefindlichen Einkaufswagens 1 zuerst nach und nach parallelogrammartig immer mehr zu einem flachen Paket, bis er anschließend um etwa 90° nach oben verschwenkt wird. Zu Beginn dieses Schwenkvorganges gleitet der Kindersitz 7 auf der wenigstens einen Platte 15 mit seinen unteren Abschnitten 13 ein Stück weit nach vorne, bevor er dann letztendlich angehoben wird. Die wenigstens eine Platte 15 besitzt eine glatte, reibungsarme Oberfläche. Als Material bietet sich Polyamid an, das sehr gute Gleiteigenschaften besitzt. Die mindestens eine Platte 15 ist mit geeigneten bekannten Befestigungsmitteln an den Gitterstäben des Korbbodens 6 befestigt. Auch eine schnappschlüssige Verbindung ist möglich. Sind zwei Platten 15 vorgesehen, so erstrecken diese sich in Längsrichtung des Korbes 5.

## Patentansprüche

1. Einkaufswagen (1), in den ein gleicher Einkaufswagen (1) platzsparend einschiebbar ist, mit einem Fahrgestell (2), das einen aus Drahtgitter gefertigten Korb (5) trägt, mit einer Schiebeeinrichtung (4) und mit einem von der Seite betrachtet parallelogrammartig ausgebildeten Kindersitz (7), der nahe der Schiebeeinrichtung (4) angeordnet ist, wobei der Kindersitz (7)an einer quer zur Schieberichtung des Einkaufswagens (1) angeordneten horizontalen Achse (8) schwenkbar gelagert ist und sich aus seiner Gebrauchslage, in der er sich am Korbboden (6) abstützt, zum Zwecke des Einschiebens eines weiteren gleichen Einkaufswagens (1) nach oben in eine Nichtgebrauchslage verschwenken lässt, **dadurch gekennzeichnet, dass** am Korbboden (6) wenigstens eine aus gleitfähigem Material bestehende Platte (15) angeordnet ist, auf welcher der Kindersitz (7) schiebebeweglich abgestützt ist.

2. Einkaufswagen nach Anspruch 1, **dadurch gekennzeichnet, dass** bei Verwendung von zwei Platten (15) diese sich in Längsrichtung des Korbes (5) erstrecken.

## Claims

1. A shopping trolley (1), into which a like shopping trolley (1) can be pushed in a space-saving manner, comprising a wheel frame (2) carrying a basket (5) made from a wire lattice, a pushing device (4) and a child seat (7) which is shaped like a parallelogram when viewed from the side and which is arranged in the vicinity of the pushing device (4), wherein the child seat (7) is pivotably mounted on a horizontal axis (8) extending transversely to the pushing direction of the shopping trolley (1) and can be pivoted upwards from its position of use, in which it is supported against the bottom (6) of the basket, into a position of non-use for the purpose of pushing in a further, like shopping trolley (1), **characterised in that** at least one plate (15) made of anti-friction material is arranged on the bottom (6) of the basket, on which plate (15) the child seat (7) is slidably supported.

2. A shopping trolley according to claim 1, **characterised in that**, if two plates (15) are provided, they extend in the longitudinal direction of the basket (5).

## Revendications

1. Chariot à provisions (1), dans lequel un chariot identique (1) peut être emboîté de manière peu encombrante, avec un châssis (2) qui porte un panier (5) fabriqué en grille métallique, avec un dispositif de poussée (4) et avec un siège pour enfant (7) configuré en parallélogramme en vue de côté, qui est disposé à proximité du dispositif de poussée (4), sachant que le siège pour enfant (7) est monté pivotant sur un axe horizontal (8) disposé transversalement à la direction de poussée du chariot (1) et peut, à partir de sa position d'utilisation dans laquelle il s'appuie sur le fond (6) du panier, être pivoté vers le haut dans une position de non utilisation afin d'emboîter un autre chariot identique (1), **caractérisé en ce qu'**au moins une plaque (15) constituée de matériau permettant le glissement, sur laquelle le siège pour enfant (7) s'appuie avec possibilité de glissement, est disposée sur le fond (6) du panier.

2. Chariot à provisions selon la revendication 1, **caractérisé en ce que**, en cas d'utilisation de deux plaques (15), celles-ci s'étendent dans la direction longitudinale du panier (5).
